# EUROPÄISCHE PATENTSCHRIFT

(11) **EP 0 748 720 B1**
(45) Veröffentlichungstag und Bekanntmachung des Hinweises auf die Patenterteilung: **09.08.2000**
(21) Anmeldenummer: 96106124.9
(22) Anmeldetag: 18.04.1996
(51) Int. Cl.: B60R 5/00, B60R 7/00, B60R 5/04

(54) **Grossraum-Schublade zum Einbau in Servicefahrzeuge**
Large drawer to be installed in a service vehicle
Grand tiroir destiné à être monté dans un véhicule de service

(30) Priorität: 13.06.1995 DE 19521504
(43) Veröffentlichungstag der Anmeldung: 18.12.1996
(73) Patentinhaber: SORTIMO INTERNATIONAL AUSRÜSTUNGSSYSTEME FÜR SERVICEFAHRZEUGE GmbH, D-86441 Zusmarshausen (DE)
(72) Erfinder: Dischinger, Herbert, 86420 Biburg (DE); Braun, Reinhold, 86424 Dinkelscherben (DE)
(74) Vertreter: Zipse + Habersack

(56) Entgegenhaltungen:
- EP-A- 0 314 176
- WO-A-82/02175
- CH-A- 197 756
- DE-A- 2 302 972
- DE-U- 8 714 287
- DE-U- 9 217 039
- GB-A- 1 098 460
- US-A- 2 792 137
- US-A- 3 132 755
- US-A- 4 824 158
- US-A- 5 046 913

## Beschreibung

Die Erfindung betrifft eine Großraum-Schublade zum Einbau in Servicefahrzeuge, nämlich Kombi- und/oder Großraumlimousinen (Vans), Transporter und dergleichen Fahrzeuge.

Es ist bekannt, Servicefahrzeuge mit Schränken auszurüsten, in denen der Servicetechniker sein Werkzeug und seine vor Ort benötigten Materialien verstauen kann. Diese Schränke sind meist längs der Fahrzeugseitenwände aufgestellt und sie enthalten Fächer und Schübe. Keinesfalls eignen sich diese Schränke zur Aufnahme von großvolumigen Teilen.

Zum Erleichtern des Be- und Entladens von Kombifahrzeugen und kleinen Lastkraftwagen ist es aus der DE-U-78 30 824 bekannt, einen Ausziehboden, der wie eine Schublade gehandhabt wird, auf der Ladefläche des Fahrzeugs entsprechend den Merkmalen des Oberbegriffs des Anspruchs 1 anzuordnen. Dieser Ausziehboden besteht aus zwei Platten, die durch Führungsschienen der Unterplatte und Trägerprofile mit Rollen der Oberplatte zu einem Gerät miteinander verbunden sind, wobei auch eine Leichtere Rahmenkonstruktion vorgesehen sein kann (siehe Anspruch 6 der DE-U-78 30 824). Das Gerät wird mit der Unterplatte auf den Fahrzeugboden geschraubt, geklemmt oder geklebt.

Das Befestigen des Schubladengeräts mit einer Unterplatte auf dem Fahrzeugboden befriedigt in zweierlei Hinsicht nicht:
1. Der Einbau der Konstruktion ist nicht Crash-sicher, und damit ist die Unfallgefahr sehr hoch, da ein Anschrauben an den Fahrzeugboden nicht ausreichend ist, um den Kräften bei einem Frontal-Crash widerstehen zu können, so daß die Teile bei einem Frontal-Crash in den Passagierbereich fliegen können.
2. Die Konstruktion wird durch ihren Aufbau sehr schwer und kann deshalb aufgrund der begrenzten Zuladung nur bedingt in Kombifahrzeugen eingesetzt werden. Außerdem behindert die an den Fahrzeugboden geschraubte Unterplatte den Zugang zum Reserverad, wenn dieses, wie es häufig der Fall ist, im Boden des Laderaums untergebracht ist.

Demgegenüber liegt der Erfindung die Aufgabe zugrunde, eine Großraumschublade zu schaffen, die sich rasch und problemlos in unterschiedliche Fahrzeugtypen einbauen läßt, ohne daß sich deren Crash-Verhalten wesentlich verändert. Außerdem soll die Konstruktion leicht sein, um somit eine hohe Zuladung zu gewährleisten.

Diese Aufgabe wird mit einer Großraumschublade gelöst, wie sie durch den Anspruch 1 gekennzeichnet ist. Nach der Erfindung sind in Kombination vorgesehen
- eine Unterkonstruktion des Schubs in Form eines Leichtbau-Stahlstrukturrahmens mit Laufschienen für die Schublade;
- ein Einbausatz zur Montage dieser Unterkonstruktion an vorhandene Befestigungspunkte des betreffenden Fahrzeugtyps, und
- Ausknickstellen und/oder Sollbruchstellen in dem Schub bzw. den zur Heckseite hin gelegenen Befestigungspunkten.

Die Großraumschublade nach der Erfindung besitzt einen modularen Aufbau mit einem Schub als Basisbaugruppe und einem Einbausatz zur Montage dieses Schubs an vorhandene Befestigungspunkte des betreffenden Fahrzeugs derart, daß der Schub zur Heckseite des Fahrzeugs hin ausfahrbar ist. Vorteilhaft erstreckt sich dabei die Großraumschublade über die gesamte Breite des Laderaums des Fahrzeugs. Als vorhandene Befestigungspunkte dienen beispielsweise die Rücksitzlehnenarretierung, die Stoßstangenbefestigung, die Reserveradmulde oder die Anbringungspunkte für die Sicherheitsgurte.

Die Großraum-Schublade nach der Erfindung ist geeignet zum Transport von Euro-Paletten in Kombifahrzeugen, da der Schub einen Auszug hat, der über die Tiefe der Heckklappe solcher Kombifahrzeuge reicht und somit ein Beladen mit dem Stapler ermöglicht. Durch den Einsatz von Euro-Stapelboxen kann die Schublade variabel aufgeteilt werden, und die Stapelkästen können auch entnommen werden, um Material auf die Baustelle oder den Einsatzort zu transportieren.

Beim Einbau in Kombifahrzeuge ist die Zugänglichkeit oder Unterbringung des Reserverads ein großes Problem. Bei der Großraum-Schublade kann der Schub ohne Werkzeug ausgehängt werden, um so leichten Zugang zum Reserverad und zum Bordwerkzeug zu schaffen.

Durch den Auszug der Schublade von ca. 900 mm ist ein ergonomisches Be- und Entladen möglich. Da die Zuladung in Kombifahrzeugen begrenzt ist, wird bei der Auslegung der Großraum-Schublade die Gewichtsersparnis im Vordergrund stehen. Eine Gewichtsersparnis wird erreicht, indem die Unterkonstruktion der Großraum-Schublade ein Leichtbau-Stahlstrukturrahmen ist, wobei die Platten aus Wabenpaneelen erstellt sind. Es wird eine Tragkraft des Schubs von 1000 N erreicht.

Gemäß einer vorteilhaften Weiterbildung der Erfindung ist für den Schub ein Aufbausatz vorgesehen zur Befestigung an die Unterkonstruktion dieses Schubs. Dieser Aufbausatz besitzt unterschiedliche Höhen entsprechend den unterschiedlichen Höhen von Euro-Stapelboxen, die auf dem Schub transportiert werden sollen. Der Aufbausatz dient einerseits zur Anbringung einer Deckplatte, die dann als weitere Ladefläche genutzt werden kann. Andererseits kann auf dem Aufbausatz ein weiterer Schub angebracht werden, so daß Großraum-Schubladen doppelstöckig angeordnet werden können. Über der oberen Großraumschublade kann wiederum mittels eines Aufbausatzes eine Deckplatte angeordnet werden.

Durch den Einbau der Großraumschublade in Servicefahrzeuge soll sich deren Crash-Verhalten nicht wesentlich verändern. Es ist deshalb vorgesehen, in den Schub Ausknickstellen und/oder in den Einbausatz an den Richtung Heckklappe gelegenen Montagepunkten Sollbruchstellen einzuarbeiten. Im Falle eines Zusammenstoßes wird damit die Großraumschublade nicht in den Fahrerraum geschoben, sondern sie knickt aus oder schwenkt nach oben, um sich dann gegen die Fahrzeugkarosserie abzustützen und dabei Aufprallenergie zu absorbieren.

Es ist wichtig, daß die eingeschobene Schublade während der Fahrt und auch beim Öffnen der Fahrzeugheckklappe sicher verriegelt ist. Zum Herausziehen der Schublade soll diese Verriegelung aber leicht lösbar sein. Die Erfindung sieht deshalb für die Großraumschublade ein Einhand-Verschlußsystem mit Zwangsverriegelung vor.

Nachfolgend wird die Erfindung in einem Ausführungsbeispiel anhand beigefügter Zeichnungen näher erläutert. Es zeigen
- Figur 1: die Rückansicht eines Kombifahrzeugs mit eingebauter Großraum-Schublade (bei weggelassener Heckklappe),
- Figur 2: in etwas verändertem Maßstab eine teilweise unterbroche Seitenansicht der Großraum-Schublade, und
- Figur 3: die Seitenansicht einer doppelstöckigen Anordnung einer Großraumschublade.

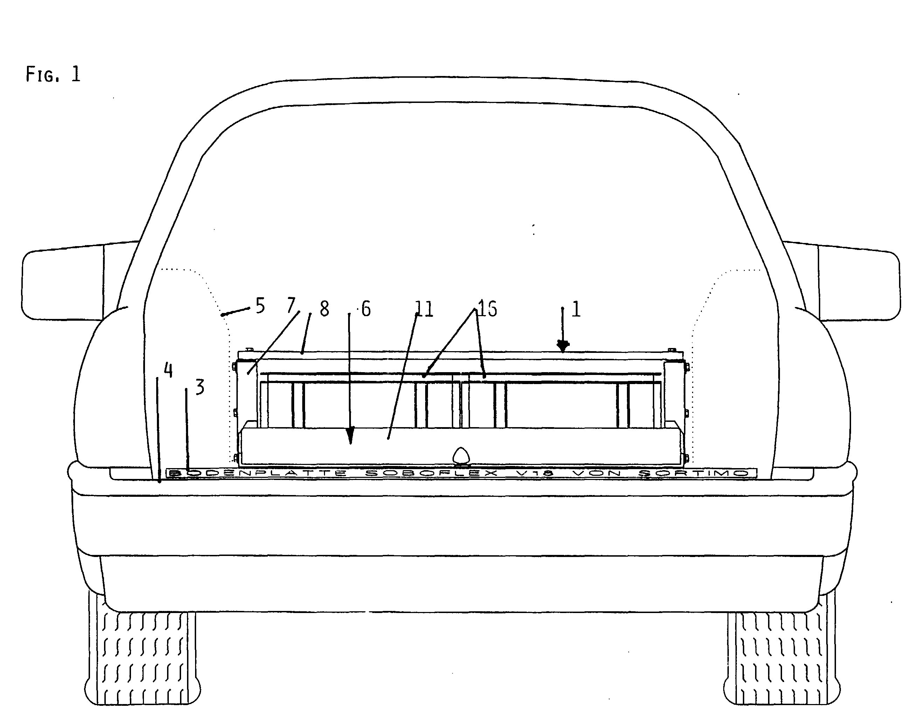

Figur 1 zeigt die Großraumschublade 1 eingebaut in den hinteren Laderaum eines Kombifahrzeugs 2, dessen Heckklappe aus Darstellungsgründen weggelassen ist. Die Großraumschublade 1 ist unmittelbar oder unter Zwischenschaltung einer Holzbodenplatte 3 auf die Ladefläche 4 des Kombifahrzeugs 2 montiert, und sie erstreckt sich zwischen den Radkästen 5 im wesentlichen über die gesamte Breite des Laderaums. Die Schublade ist zur Heckseite des Fahrzeugs hin ausfahrbar.

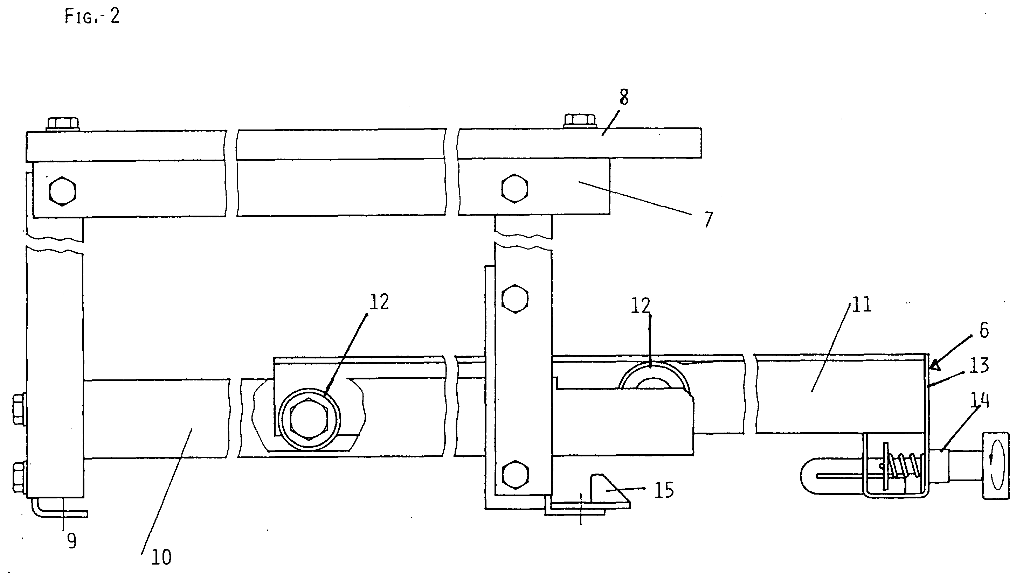

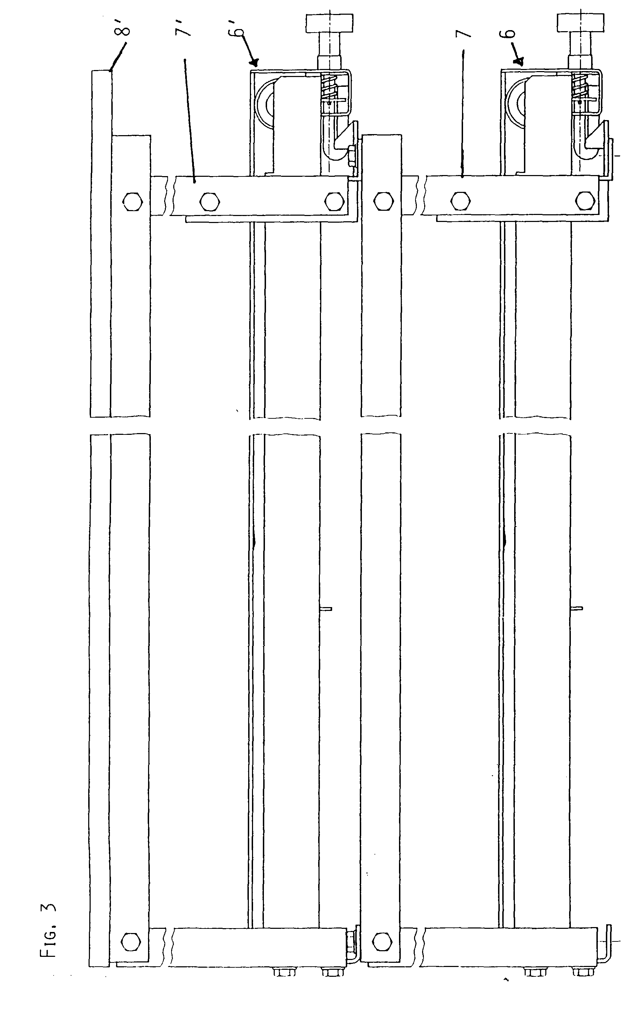

Die Großraumschublade 1 besitzt einen modularen Aufbau mit einem Schub 6 als Basisbaugruppe, einem Einbausatz zur Montage des Schubs 6 an vorhandene Befestigungspunkte des betreffenden Fahrzeugs 2 und einem Aufbausatz 7 entweder zur Anbringung einer Deckplatte 8 über dem Schub 6 (Figuren 1 und 2) oder zur Anbringung eines weiteren Schubs 6' über diesem ersten Schub 6 (Figur 3).

Der Schub 6 setzt sich zusammen aus einer Unterkonstruktion 9 in Form eines Leichtbau-Stahlstrukturrahmens mit Laufschienen 10 und aus der eigentlichen Schublade 11, die in bekannter Weises mittels kugelgelagerter Räder 12 in den Laufschienen 10 geführt ist. Aus Gewichtsgründen ist die Schubladenbodenplatte aus Wabenpaneelen erstellt. An die Stirnplatte 13 der Schublade 11 ist ein federbelasteter Drehriegel 14 befestigt, der mit einem Rastanschlag 15 an der Unterkonstruktion 9 zusammenwirkt.

Der Einbausatz zur Befestigung des Schubs 6 an vorhandene Befestigungspunkte des betreffenden Fahrzeugs ist in den Zeichnungen nicht dargestellt. Dieser Einbausatz besteht aus Verbindungsgliedern wie Schrauben, Muttern, Winkeln, Bändern usw., z. B. zum Verschrauben der Unterkonstruktion 9 des Schubs 6 mit vorhandenen Befestigungspunkten auf der Bodenplatte 3, auf der Ladefläche 4 oder an den Seitenwänden des Fahrzeugs.

Die Innenmaße der Schublade 11 sind zweckmäßig auf Euro-Palettenformat (900mm x 1200 mm) ausgelegt. Dadurch kann ein sehr großes Anwendungsspektrum abgedeckt werden, da alle Euro-Palettenrastermaße auf den Schub passen. In Figur 1 sind Euro-Stapelboxen 16 auf der Schublade 11 angeordnet.

Der Aufbausatz 7, der an die Unterkonstruktion 9 befestigt ist, besitzt unterschiedliche Höhen entsprechend den unterschiedlichen Höhen der nach Kundenwunsch zu transportierenden Euro-Stapelboxen 16. Die auf dem Aufbausatz 7 befestigte Deckplatte 8 ist aus Gewichtsgründen aus Wabenpaneelen erstellt. Diese Deckplatte 8 bildet, wie Figur 1 zeigt, eine neue Ladefläche über der Großraumschublade 1.

Figur 3 zeigt die doppelstöckige Anordnung einer Großraum-schublade. Auf den unteren Schub 6 ist über den Aufbausatz 7 ein weiterer Schub 6' befestigt, der seinerseits einen weiteren Aufbausatz 7' mit Deckplatte 8' trägt.

## Patentansprüche

1. Großraumschublade zum Einbau in Servicefahrzeuge derart, daß der Schub zur Heckseite des Fahrzeugs hin ausfahrbar ist, wobei
eine Unterkonstruktion des Schubs (6) in Form eines Leichtbau-Stahlstrukturrahmens (9) mit Laufschienen (10) für die Schublade und
ein Einbausatz zur Montage dieser Unterkonstruktion an vorhandene Befestigungspunkte des betreffenden Fahrzeugtyps vorgesehen ist, dadurch gekennzeichnet,
- daß in den Schub (6) Ausknickstellen und/oder in den Einbausatz an den zur Heckseite hin gelegenen Befestigungspunkten Sollbruchstellen eingearbeitet sind.

2. Großraumschublade nach Anspruch 1
**gekennzeichnet** durch
einen Aufbausatz (7) für den Schub (6) mit einer Deckplatte (8) oder mit einem weiteren Schub (6') zur Anbringung an dem Aufbausatz (7) über dem ersten Schub (6).

3. Großraumschublade nach Anspruch 2
**gekennzeichnet** durch
unterschiedliche Höhen des Aufbausatzes (7) entsprechend den unterschiedlichen Höhen von Euro-Stapelboxen.

4. Großraumschublade nach einem der Ansprüche 1-3,
dadurch **gekennzeichnet**,
daß die Bodenplatte des Schubs (6) und die Deckplatte (8) des Aufbausatzes (7) aus Wabenpaneelen erstellt sind.

5. Großraumschublade nach einem der vorhergehenden Ansprüche,
**gekennzeichnet** durch
ein Einhandverschlußsystem (14,15) mit Zwangsverriegelung der eingeschobenen Schublade (11).

## Claims

1. A large-volume drawer for installation in service vehicles such that the slide-in unit can be pulled out in the direction of the tail of the vehicle, there being provided a substructure of the slide-in unit (6), in the form of a lightweight steel structural frame (9) with running rails (10) for the drawer, and an installation arrangement, for the installation of said substructure at fastening points provided in the relevant type of vehicle, characterized in that buckling points are made in the slide-in unit (6) and/or predetermined breaking points are made in the installation arrangement, at the fastening points located in the direction of the tail.

2. A large-volume drawer according to claim 1, characterized by a superstructure arrangement (7) for the slide-in unit (6) with a cover plate (8) or with a further slide-in unit (6') for fitting on the superstructure arrangement (7) above the first slide-in unit (6).

3. A large-volume drawer according to claim 2, characterized by different heights of the superstructure arrangement (7) corresponding to the different heights of Euro-stacking boxes.

4. A large-volume drawer according to any one of claims 1-3, characterized in that the base plate of the slide-in unit (6) and the cover plate (8) of the superstructure arrangement (7) are produced from honeycomb panels.

5. A large-volume drawer according to one of the preceding claims, characterised by a single-handed closure system (14, 15) with positive locking of the pushed-in drawer (11).

## Revendications

1. Tiroir de grande taille destiné à être monté dans un véhicule de service de telle sorte que le corps du tiroir peut être ressorti en direction de l'arrière du véhicule, et dans lequel il est prévu
une structure inférieure du corps (6) sous la forme d'un cadre formé d'une structure légère en acier (9) comportant des rails (10) pour le tiroir, et
un ensemble de montage servant à monter cette structure inférieure au niveau de points de fixation existant dans le type de véhicule considéré,
caractérisé en ce que
des zones de pliage sont formées par usinage dans le corps de tiroir (6) et/ou des zones de rupture de consigne sont formées par usinage dans l'ensemble de montage, au niveau des points de fixation disposés sur le côté arrière.

2. Tiroir de grande taille selon la revendication 1, caractérisé par un ensemble de montage (7) pour le corps de tiroir (6) comportant une plaque de recouvrement (8) ou un autre corps (6') destiné à être monté sur l'ensemble de montage (7) par dessus le premier corps de tiroir (6).

3. Tiroir de grande taille selon la revendication 2, caractérisé en ce que l'ensemble de montage (7) possède des hauteurs différentes en fonction des hauteurs différentes de boîtiers d'empilage Euro.

4. Tiroir de grande taille selon l'un des revendications 1 à 3, caractérisé en ce que la plaque de base du tiroir (6) et la plaque de recouvrement (8) de l'ensemble de montage (7) sont constituées par des panneaux en nid d'abeilles.

5. Tiroir de grande taille selon l'une des revendications précédentes, caractérisé par un système de fermeture à une main (14,15) avec verrouillage forcé du tiroir inséré (11).
